# EUROPÄISCHE PATENTSCHRIFT

(11) **EP 1 877 752 B1**
(45) Veröffentlichungstag und Bekanntmachung des Hinweises auf die Patenterteilung: **05.01.2011**
(21) Anmeldenummer: 06723896.4
(22) Anmeldetag: 31.03.2006
(51) Int. Cl.: G01N 1/31, G01N 35/04

(54) **VORRICHTUNG ZUR HANDHABUNG UND ZUORDNUNG MIKROTOMIERTER GEWEBEPROBEN**
APPARATUS FOR HANDLING AND CLASSIFYING MICROTOMIZED TISSUE SAMPLES
DISPOSITIF POUR MANIPULER ET ATTRIBUER DES ECHANTILLONS DE TISSUS COUPES A L'AIDE D'UN MICROTOME

(30) Priorität: 06.05.2005 DE 102005021197
(43) Veröffentlichungstag der Anmeldung: 16.01.2008
(73) Patentinhaber: Microm International GmbH, 69190 Walldorf (DE)
(72) Erfinder: SCHOCK, Stefan, 68723 Oftersheim (DE); HEID, Hans, L., 69245 Bammental (DE)
(74) Vertreter: Weber, Walter
(86) Internationale Anmeldenummer: PCT/EP2006/002935
(87) Internationale Veröffentlichungsnummer: WO 2006/119826

(56) Entgegenhaltungen:
- DE-A1- 10 236 417
- US-A- 5 386 318
- US-A- 5 690 892
- US-A1- 2003 215 936

## Beschreibung

Die Erfindung betriff eine Vorrichtung zur Handhabung mikrotomierter Gewebeproben, die auf einem Objektträger angeordnet und mit einem maschinenlesbaren Code versehen sind, wobei ein Lesegerät der Erfassung der Informationen des Codes und eine Steuerung einer Umsetzung der Informationen für die Handhabung dienen und wobei eine Übertragungsvorrichtung und mindestens ein Antrieb vorgesehen sind, die derart ausgebildet sind, daß sie Objektträger zu einer Bereithaltungsvorrichtung mit mehreren Ebenen verbringen können.

Bereits von der manuellen Handhabung ist es bekannt, die Objektträger mit einem Code zu versehen, der alle wesentlichen Informationen enthält, um eine Auswertung und Aufbewahrung zu ermöglichen. Nach dem Schneiden, Strecken, Aufbringen der Probe auf einem Objektträger sowie dem Trocknen und Entparaffinieren der auf dem Objektträger befindlichen Probe erfolgen Weiterbehandlungen, die der Code oftmals ebenfalls enthält. So müssen die Proben gefärbt werden, damit die Gewebestrukturen unter dem Mikroskop gut sichtbar sind. Nach dem Färben wird der Objektträger mit einem Deckglas oder einer anderen schützenden Schicht eingedeckt, um die Probe vor Beschädigungen zu schützen. Würden dabei alle Gewebeproben standardisiert gleich behandelt, so können sie einfach nacheinander die Behandlungsprozedur durchlaufen, womit die Reihenfolge und damit die Zuordnung zu einem Patienten erhalten bleibt. Bei unterschiedlichen Behandlungen von Proben, die von einem Patienten stammen, müssen diese verschiedenen Behandlungsstationen durchlaufen, beziehungsweise mit verschiedenen Reagenzien - das ist in der Regel bei der Färbung der Fall - benetzt werden. Da die Behandlung mit Reagenzien für einzelne Proben unwirtschaftlich und aufwendig ist, werden die Objektträger entsprechend der vorzunehmenden Behandlung in Objektträgerkörbe sortiert, um sie dann auf wirtschaftliche Weise in größerer Menge gemeinsam zu behandeln. Dies hat zur Folge, daß bei derart in größerer Menge behandelten Objektträgern jegliche auswerteorientierte Zuordnung zu einem Patienten verlorengeht. Es ist jedoch erforderlich, daß die Objektträger mit den Gewebeproben eines Patienten aus den behandelten Gewebeproben wieder aussortiert und zusammengefaßt werden, da eine diagnostische Auswertung die zeitgleiche Verfügbarkeit aller Gewebeproben eines Patienten erfordert. Dazu werden sie auf einem oder, wenn dieser nicht ausreicht, auf mehreren Präsentationsträgern angeordnet. Dieses Zuordnen war bisher eine müheselige Handarbeit, bei der leicht Fehler auftreten konnten. Da die Codes der Objektträger zunehmend nur noch als maschinenlesbare Codes ausgeführt werden, erschwert dies eine manuelle Sortierung zusätzlich.

Vorrichtungen zur Durchführung einer solchen Zuordnung sind aus dem Stand der Technik nicht bekannt, jedoch Handhabungsvorrichtungen für Objektträger, die anderen Zwecken dienen:
Aus der DE 102 22 333 A1 ist noch eine Handhabungsvorrichtung für Objektträger bekannt, die Tableaus mit Objektträgern befüllt. Diese Vorrichtung sieht jedoch keine Zuordnung von Objektträgern vor, erfaßt daher keine Codes und benötigt auch deren Informationen nicht. Es werden lediglich Tableaus mit von einem Drucker kommenden Objektträgern nacheinander befüllt.

Bei der Vorrichtung und dem Verfahren der DE 101 54 843 A1 geht es darum, sicherzustellen, daß die Kennzeichnung der Objektträger mit mikrotomierten Gewebeproben mit den Informationen der Gewebeproben, von denen diese stammen, übereinstimmen und bei der Kennzeichnung Zuordnungsfehler bei mindestens teilweiser manueller Handhabung ausgeschlossen werden. Die Kennzeichnung der mikrotomierten Gewebeproben ist zwar auch maschinell erfaßbar, es ist jedoch keine Vorrichtung offenbart, welche Zuordnungen unsortierter Objektträger nach irgendwelchen Kriterien vornimmt.

Die US 2003/0215936 A1 betrifft ein Verfahren und eine Vorrichtung zur massenhaften automatischen Analyse von mikrotomierten Gewebeproben. Dabei ist zum einen vorgesehen, diese auf identifizierbaren Plätzen von Arrays abzulegen, welche als orthogonale Anordnungen auf Trägern ausgebildet sind, welche wiederum in mehreren Schichten gestapelt sind. Dies dient der Erfassung einer Gewebeprobe durch eine räumliche Matrix von kleinen aus ihr gewonnenen Gewebekernen. Offenbart ist zum anderen eine Stapelung einzelner Objektträger neben- und übereinander mittels einer Vorrichtung der eingangs genannten Art. Da jeweils die Auswertung und Einordnung automatisch erfolgen, ist die Zuordaungsproblematik von Gewebeproben zu einem Patienten mit Datenverarbeitungsmitteln gelöst. Eine patientenorientierte räumliche Zuordnung der mikrotomierten Gewebeproben, wie für eine manuelle Auswertung, wird daher nicht benötigt. Es sind auch keine Träger offenbart, bei denen verschieden behandelte Objektträger für eine patientenorientierte zeitgleiche diagnostische Auswertung zusammengefügt werden können. Da die Bereithaltungsvorrichtung zur Aufnahme einzelner Objektträger ausgebildet ist, erstrecken sich die Ebenen auch nicht mit weiteren Aufnahmeplätzen in die Tiefe, so daß die Aufnahmekapazität zu gering ist, um größere Mengen einfügen zu können.

Die DE 102 36 417 A1 lehrt ein massenweises Einscannen von Objekten, wozu die Objektträger einem Scanner zugeführt und anschließend archiviert werden. Da die elektronischen Bilder der Diagnose dienen, können diese mit Mitteln der Datenverarbeitung zugeordnet und auf einem Bildschirm präsentiert werden.

Die US 5,690,892 offenbart ein Handhabungssystem für Objektträger der eingangs genannten Art, um diese aus einer Kassette, in der sie übereinandergestapelt sind, herauszuholen und einem Mikroskop zuzuführen. Danach können sie an dieselbe oder eine andere Stelle der Kassette zu diesem zurückgebracht werden. Maschinenlesbare Codes dienen dabei zur Steuerung.

Die US 5,386,318 offenbart ebenfalls ein Handhabungssystem für Objektträger der eingangs genannten Art, bei dem die Objektträger in Kassetten übereinandergestapelt untergebracht sind, welche sich auf einem karussellartigen Magazin befinden. Der Zweck der Vorrichtung besteht in der Entnahme, um die Objektträger für eine Betrachtung einem Mikroskop zuzuführen. Es ist jedoch auch offenbart, daß die Entnahmevorrichtung auch dazu dienen kann, die Objektträger von einer Kassette zur anderen umzusortieren. Maschinenlesbare Codes dienen dabei der Steuerung dieser automatischen Handhabung. Der Erfindung liegt daher die Aufgabe zugrunde, größere Mengen gemeinsam behandelter Objektträger, deren Zuordnung zu den Patienten durch diese Zusammenfassung zur gemeinsamen Behandlung verlorengegangen ist, in wirtschaftlicher Weise patientenorientiert derart einzuordnen, daß eine zeitgleiche Präsentation der von einem Patienten stammenden Objekte für eine diagnostische Auswertung möglich ist.

Die Aufgabe wird erfindungsgemäß dadurch gelöst, daß eine Vorrichtung der eingangs genannten Art derart ausgebildet wird, daß die Bereithaltungsvorrichtung in den regalartig angeordneten Ebenen jeweils in einer y-Richtung nebeneinander angeordnete Präsentationsträger aufweist, wobei die Präsentationsträger jeweils in einer rechtwinklig dazu verlaufenden x-Richtung mehrere Aufnahmen für die Objektträger aufweisen, daß die Übertmguingsvorrichtung zur Aufnahme der Objektträger von einer Zuführeinrichtung und zur Verbringung der Objektträger an die Aufnahmen ausgebildet ist, indem mit einer ersten Stellbewegung die Ebene, mit einer zweiten Stellbewegung der Präsentationsträger und mit einer dritten Stellbewegung die Aufnahme angefahren wird, und daß die Steuerung derart ausgebildet ist, daß sie den mindestens einen Antrieb aufgrund der Informationen des Codes des Objektträgers dahingehend steuert, daß durch die Übertragungsvorrichtung Objektträger mit Gewebeproben, die vom gleichen Patienten stammen, auf mindestens einen Präsentationsträger in einer dem Patienten zugeordneten Reihenfolge verbringbar sind.

Durch die Erfindung wird eine automatische Zuordnungsvorrichtung bereitgestellt, um Objektträger mit Proben, die von einer Vielzahl von Patienten stammen, patientenorientiert in Präsentationsträger zu verbringen, so daß eine diagnostische Auswertung der Gewebeproben möglich ist. Im Normalfall wird für einen Patienten ein Präsentationsträger verwendet. Wie oben erwähnt, können es auch mehrere sein, oder, wenn pro Patient nur wenige Gewebeproben vorhanden sind, können auch Gewebeproben mehrerer Patienten auf einem Präsentationsträger sein, dann natürlich jeweils in einer dem einzelnen Patienten zugeordneten Reihenfolge. Da die Objektträger, wie eingangs erwähnt, behandlungsorientiert sortiert wurden, sind Gewebeproben einer Vielzahl von Patienten miteinander vermengt, derart, daß sie über mehrere Behandlungschargen verteilt und dort mit den Gewebeproben anderer Patienten gemeinsam behandelt wurden. Dadurch muß die erfindungsgemäße Zuordnungsvorrichtung die Objektträger jeder eingehenden Behandlungscharge auf viele Präsentationsträger verteilen, so daß am Ende für jeden Patienten ein - oder auch mehrere - Präsentationsträger mit seinen Gewebeproben für die medizinische Auswertung bereitstehen.

Der Vorteil der Erfindung besteht darin, daß eine fehlerfreie und wirtschaftliche Handhabung der in der Praxis immer größer werdenden Mengen von Gewebeproben möglich ist. Um möglichst viele Präsentationsträger bereitzuhalten, ist deshalb vorgesehen, daß Präsentationsträger in mehreren Ebenen bereitgehalten sind. Zusätzlich kann eine manuelle, mit hohem Risiko behaftete Zuordnungsarbeit eingespart werden. Außerdem können dann auch lediglich maschinenlesbare Codes verwendet werden, die für eine manuelle Zuordnung eine weitere Hürde bedeuten. Der Begriff Code wird hier für den materiellen Informationsträger gebraucht, der als Label, Chip, usw. ausgebildet sein kann. Die Verwendung von Chips hat den Vorteil, daß sie nicht nur lesbare Daten bereithalten, sondern weitere Daten aufnehmen können, die dann jederzeit abrufbar sind.

Für die Bearbeitung großer Mengen ist es besonders vorteilhaft, wenn die Bereithaltungsvorrichtung eine paternosterartige Anordnung von Ebenen bereithält, um die Anzahl der Ebenen zu vergrößern.

Eine Ausgestaltung sieht vor, daß die Übertragungsvorrichtung einen Greifer aufweist, der Objektträger von der Zuführeinrichtung nimmt und mittels einer Stellbewegung zu einer freien Aufnahme des entsprechenden Präsentationsträgers verbringt. Der Greifer kann auch eine höhenmäßige Stellbewegung ausführen, um mit der regalartigen Bereithaltungsvorrichtung zusammenzuwirken, die Präsentationsträger in mehreren Ebenen bereithält. Alternativ oder zusätzlich kann die Bereithaltungsvorrichtung eine paternosterartige Anordnung von Ebenen bereithalten, um selbst die höhenmäßige Stellbewegung auszuführen. Zweckmäßigerweise wird die Automatisierung dadurch vervollständigt, daß der Bereithaltungsvorrichtung auch eine Zufuhr- und eine Abführvorrichtung für Präsentationsträger zugeordnet sind.

Falls das Lesegerät nicht schon einer vorgeordneten Station zugeordnet ist, ist es zweckmäßig, es an der Übertragungsvorrichtung anzuordnen, damit dort der Code gelesen werden kann, und die Vorrichtung eine entsprechend Zuordnung vornehmen kann. Dabei können die Codes eine unmittelbare Patientenzuordnung enthalten, oder es ist möglich, daß die Steuerung die Zuordnung durch Verknüpfung der Codes der Objektträger mit einer zentralen Datei in dem Zentralrechner vornimmt. Dies bedeutet, daß die Codes lediglich mit einer Zuordnungskennzeichnung versehen sind und die zentrale Datei alle weiteren Daten bezüglich der einzelnen Patienten enthält.

Es kann vorgesehen sein, daß die Steuerung die einem Patienten zuzuordnenden Objektträger in einer fortlaufenden Reihe an den Präsentationsträger gibt. Sind bereits Daten bezüglich der einem Patienten zuzuordnenden Gewebeproben vorhanden, so kann die Steuerung auch derart ausgebildet sein, daß sie aufgrund dieser Daten eine Reihenfolge der Objektträger mit den Geweben eines Patienten bildet. Dies ist deshalb zweckmäßig, weil die Objektträger mit den Gewebeproben möglicherweise in einer Reihenfolge ankommen, welche nicht einer Auswertereihenfolge der auswertenden Person entspricht, die üblicherweise vorgenommen wird, oder die objektiv sinnvoll ist, oder einem rationellen Arbeiten dienen, da sie standardisiert immer gleich sind. So werden möglicherweise verschiedene Färbungen von Gewebeproben in einer bevorzugten Reihenfolge betrachtet. Für diesen Fall weiß die Steuerung, wie viele Objektträger von einem Patienten vorhanden sind und wie viele Aufnahmen auf dem Präsentationsträger für einen Patienten vorzusehen sind, um diese in einer Reihenfolge anordnen zu können. Die Steuerung sortiert dann die Objektträger entsprechend der bevorzugten Reihenfolge ein.

Es kann vorgesehen sein, daß die Präsentationsträger ebenfalls mindestens einen Code aufweisen. Dieser Code kann bereits eine Kennzeichnung für eine mittelbare oder unmittelbare Patientenzuordnung enthalten. Dann muß entweder die Anordnung der Präsentationsträger in der Bereithaltungsvorrichtung an hinterlegten Plätzen stattfinden oder die Bereithaltungsvorrichtung weist eine Leseeinrichtung für die Codes der Präsentationsträger auf, so daß deren Plazierung in der Bereithaltungsvorrichtung durch die Steuerung erfaßt werden kann, um die Zuordnung der Objektträger zu den Aufnahmen der Präsentationsträger vornehmen zu können. Es ist jedoch auch möglich, daß die Bereithaltungsvorrichtung eine Schreibeinrichtung für die Informationseingabe an die Codes der Präsentationsträger aufweist. Ist dies der Fall, so ist es möglich, daß die Steuerung derart ausgebildet ist, daß sie mit der Verbringung eines Objektträgers auf einen Präsentationsträger dessen Code mit der Patientenzuordnung beschriftet. Sind sowohl die Objektträger als auch die Präsentationsträger in entsprechender Weise beschriftet, so kann diese Doppelcodierung auch für eine Verifikation genutzt werden. Selbstverständlich kann auch eine Schreibeinrichtung für eine Informationseingabe an die Codes der Objektträger vorgesehen sein, beispielsweise um dort die Einordnung auf dem Präsentationsträger ebenfalls zu hinterlegen, damit diese Zuordnung, sollte sie bei der Auswertung einmal verlorengehen, ohne weiteres erneut vorgenommen werden kann.

Ist ein Zentralrechner vorhanden, so kann die Steuerung derart ausgebildet sein, daß sie alle Zuordnungen in einer zentralen Datei dieses Zentralrechners ablegt. Zur Überprüfung der Arbeitsweise der Vorrichtung kann auch ein Display vorhanden sein, auf dem eine Klarschrift-Infornation möglich ist. Selbstverständlich ist es auch möglich, eine Eingabevorrichtung vorzusehen, um nachträglich Änderungen vornehmen zu können.

Die Zuführeinrichtung kann für eine nacheinander erfolgende Zuführung einzelner Objektträger zur Übertragungsvorrichtung ausgebildet sein. Dies ist dann zweckmäßig, wenn die erfindungsgemäße Vorrichtung beispielsweise mit einem Eindeckautomaten direkt gekoppelt ist, welcher die Objektträger mit Deckgläsern eindeckt. In diesem Fall kann es sich bei der Zuführeinrichtung, beispielsweise um ein Förderband zwischen dem Eindeckautomaten und der erfindungsgemäßen Vorrichtung handeln.

Alternativ kann vorgesehen sein, daß die Zuführeinrichtung für die Zuführung von Magazinen mit Objektträgern und die Übertragungsvorrichtung für die Entnahme von Objektträgern aus den Magazinen eingerichtet sind. Dann ist es natürlich auch zweckmäßig eine Abführeinrichtung für leere Magazine vorzusehen. Die Magazine können ebenfalls mittels Transportbändern transportiert werden. Die Übertragungsvorrichtung muß dann selbstverständlich derart eingerichtet sein, daß sie in der Lage ist, die Objektträger aus den Magazinen zu entnehmen. Dies ist beispielsweise mittels eines Greifers möglich. Es kann natürlich auch ein Schieber vorgesehen sein, der die Objektträger ähnlich wie bei einem Lichtbildmagazin aus dem Magazin schiebt.

Für die Ausgestaltung der Übertragungsvorrichtung gibt es zahlreiche Möglichkeiten. Die genaue Ausgestaltung hängt, wie bereits erwähnt, davon ab, ob einzelne Objektträger zugeführt werden, oder ob Magazine mit Objektträgern zugeführt werden. Da es zahlreiche Möglichkeiten für die Ausgestaltung einer derartigen Übertragungsvorrichtung gibt, wird zur oben erwähnten beispielhaft eine weitere Ausführungsform genannt:
So kann es sich bei der Übertragungsvorrichtung um eine Rampe handeln, welche von der Zuführeinrichtung die Objektträger erhält, wobei dann eine Stellbewegung den Rampenausgang einer freien Aufnahme eines Präsentationsträgers zuordnet und eine Verschiebevorrichtung, angeordnet ist, um den Objektträger von der Rampe zu schieben. Eine solche Übertragungsvorrichtung muß natürlich verschiedene Antriebe enthalten für Stellbewegungen, um den Rampenausgang zum entsprechenden Präsentationsträger und einer freien Aufnahme auf diesem zu bewegen. Es ist natürlich auch möglich, die Bereithaltungsvorrichtung mit den Präsentationsträgern und der jeweiligen freien Aufnahme unter den Rampenausgang zu bewegen. Weiterhin muß ein Antrieb für die Verschiebeeinrichtung vorhanden sein, damit der Objektträger in die freie Aufnahme befördert werden kann.

An der Übertragungsvorrichtung kann auch ein Detektor angeordnet sein, um unbrauchbare Objektträger zu identifizieren. So können beispielsweise durch die Eindeckung Luftblasen entstehen, die einen Gewebeschnitt für die Auswertung unbrauchbar machen. Solche Objektträger sollten entnommen und ersetzt oder nachgearbeitet werden. Zu diesem Zweck ist es sinnvoll, wenn die Steuerung die Übertragungsvorrichtung veranlaßt, unbrauchbare oder nicht zuordenbare Objektträger in ein Aussortierbehältnis zu geben. Diese Verfahrensweise hat bezüglich der nicht zuordenbaren Objektträger den Zweck, solche Objektträger mit Gewebeproben auszusortieren, von denen keine Patientenzuordnung vorgenommen werden kann, da kein Präsentationsträger für den Patienten vorhanden ist oder keine Datei, um einen solchen für einen Patienten vorzusehen.

Die Erfindung wird nachfolgend anhand von in der Zeichnung dargestellten Ausführungsformen erläutert. Es zeigen:
- **Fig. 1**: ein erstes Ausführungsbeispiel einer Übertragungsvorrichtung, sowie eine genaue Ausgestaltung von Objektträgern und Präsentationsträgern,
- **Fig. 2a und 2b**: ein Ausführungsbeispiel der Erfindung und
- **Fig. 3**: ein Diagramm möglicher Arbeitsschritte einer erfindungsgemäßen Vorrichtung.

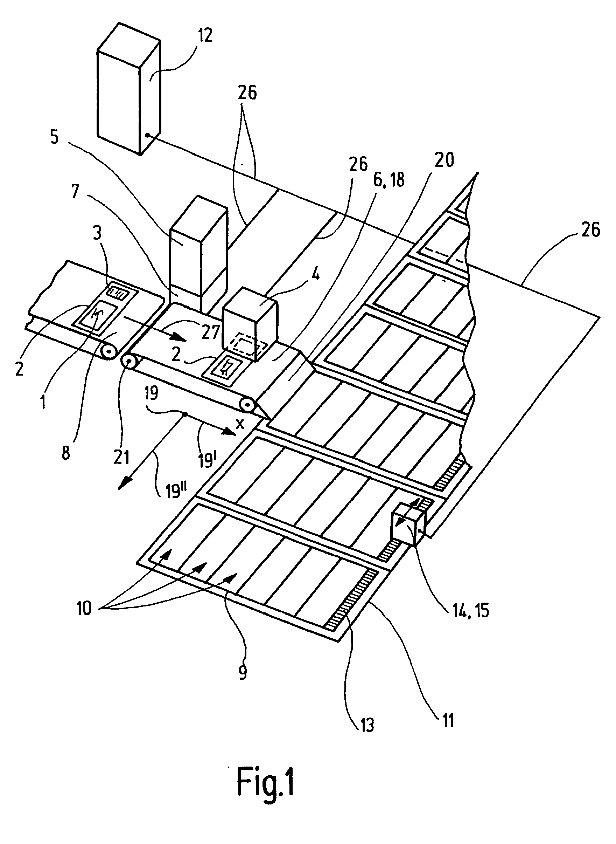

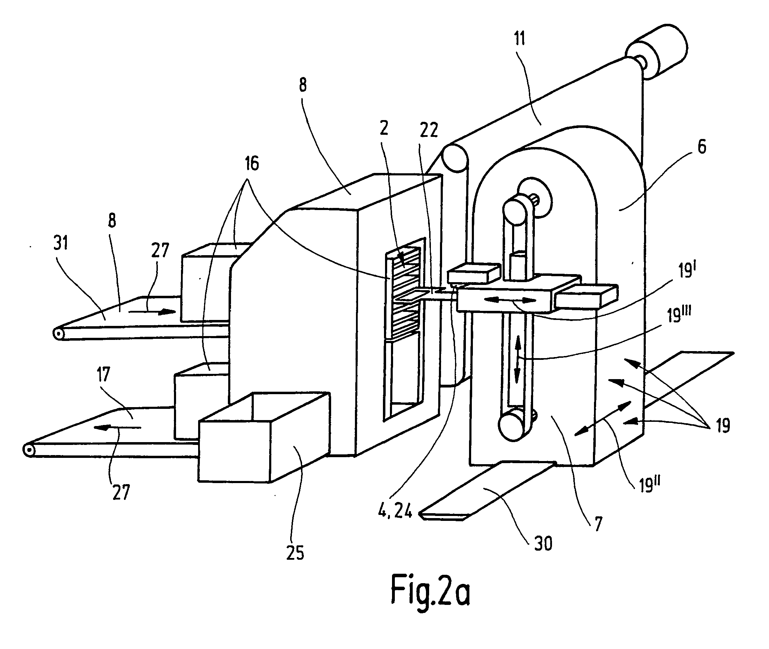

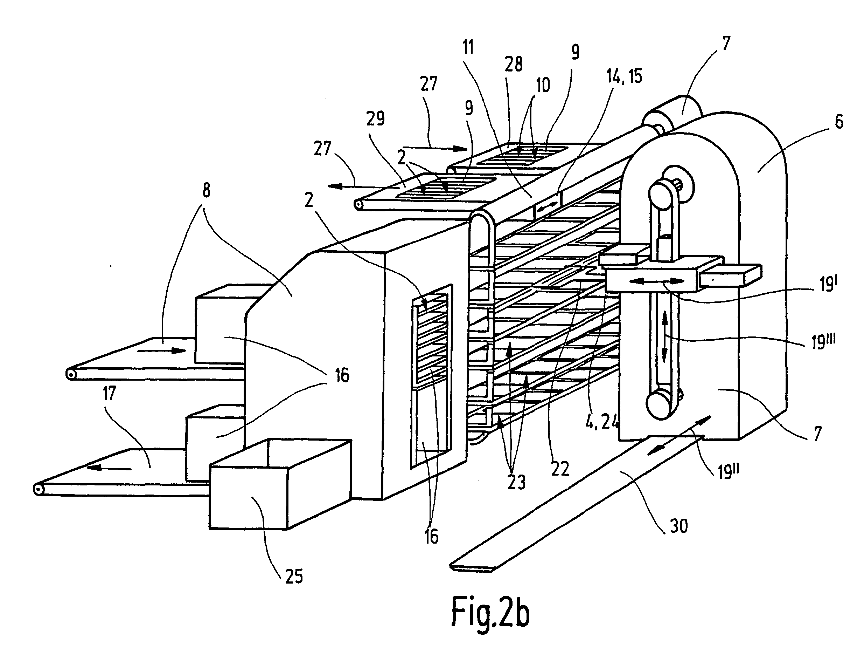

**Fig. 1** zeigt ein erstes Ausführungsbeispiel einer Übertragungsvorrichtung 6 sowie eine genaue Ausgestaltung von Objektträgern 2 und Präsentationsträgern 9. Dieses Ausführungsbeispiel einer Übertragungsvorrichtung 6 kann beispielsweise mit einer Bereitstellungsvorrichtung 11, wie sie in Fig. 2a und 2b dargestellt ist, zusammenwirken, dann muß natürlich die Rampe 18 zwischen die Ebenen 23 einführbar sein.

Mittels einer Zuführvorrichtung 8 werden der Vorrichtung Gewebeproben 1 zugeführt, die sich auf Objektträgern 2 befinden und die einen Code 3 aufweisen. Die Zuführeinrichtung 8 übergibt die Objektträger 2 einer Übertragungsvorrichtung 6, welche mit einem Lesegerät 4 ausgestattet ist. Das Lesegerät 4 erfaßt den Code 3 und übermittelt die Informationen mittels einer Signalleitung 26 entweder direkt an eine Steuerung 5 oder an einen Zentralrechner 12. Aufgrund der Codeinformationen wird die Steuerung 5 unmittelbar tätig oder der Zentralrechner 12 verfügt über entsprechende Daten, aufgrund derer die Steuerung 5 tätig wird. Dabei veranlaßt die Steuerung 5 Antriebe 7 zu Stellbewegungen 19. Hier erfolgt eine Stellbewegung 19' in x-Richtung und eine Stellbewegung 19" in y-Richtung. Letztere dient dazu, die Übertragungsvorrichtung 6 einem Präsentationsträger 9 zuzuordnen, welcher sich auf einer Bereithaltungsvorrichtung 11 befindet. Für diese Zuordnung ist eine Leseeinrichtung 14, die auch als Schreibeinrichtung 15 ausgestaltet sein kann, an der Bereithaltungsvorrichtung 11 angeordnet. Sie dient dazu, Code 13 der Präsentationsträger 9 entweder zu erfassen oder zu beschriften. Auch von der Leseeinrichtung 14, gegebenenfalls auch Schreibeinrichtung 15, geht eine Signalleitung 26 zur Steuerung 5 oder dem Zentralrechner 12. Auf diese Weise kann ein Objektträger 2 einem Präsentationsträger 9 zugeordnet werden, der entweder durch einen Code 3 einem Patienten zugeordnet ist oder der mittels der Schreibeinrichtung 15 einem Patienten dann zugeordnet wird, wenn auf ihn Objektträger 2 positioniert werden sollen, welche einem Patienten zugeordnet sind.

Damit die Objektträger 2 auf den Präsentationsträgern 9 anordenbar sind, ist die Übertragungsvorrichtung 6 als eine Rampe 18 mit einem Rampenausgang 20 ausgestattet, welcher durch eine Stellbewegung 19' in x-Richtung zur Zuführung eines Objektträgers 2 zu einer von mehreren Aufnahmen 10 eines Präsentationsträgers 9 verschoben werden kann. Ist diese Zuordnung des Rampenausgangs 20 zu einer Aufnahme 10 eines Präsentationsträgers 9 erfolgt, so tritt eine Verschiebevorrichtung 21, die hier als Band ausgebildet ist, in Aktion und fördert den Objektträger 2 in die entsprechende Aufnahme 10. Die Förderrichtung der Übertragungsvorrichtung 6 als auch der Zuführeinrichtung 8 ist mit dem Pfeil 27 angegeben. Ist der Objektträger 2 in die entsprechende Aufnahme 10 des entsprechenden Präsentationsträgers 9 gefördert, so kehrt die Übertragungsvorrichtung 6 wieder in ihre Ausgangslage zurück, um von der Zuführeinrichtung 8 den nächsten Objektträger 2 zu empfangen.

Selbstverständlich kann die Übertragungsvorrichtung 6 auch ortsfest installiert werden. Dann sorgt ein Antrieb 7 dafür, daß die Bereithaltungsvorrichtung 11 derart verschoben wird, daß der Rampenausgang 20 der entsprechenden Aufnahme 10 des entsprechenden Präsentationsträgers 9 zugeordnet ist.

Die **Fig. 2a** **und** **2b** zeigen ein Ausführungsbeispiel der Erfindung. Dabei entsprechen die Ausgestaltungen der Objektträger 2 und der Präsentationsträger 9 den Darstellungen und Beschreibungen zu Fig. 1, sie sind hier nur symbolisch dargestellt. Weiterhin entspricht die Steuerung 5 und der Zentralrechner 12 ebenfalls den Darstellungen und Ausführungen zu Fig. 1, sie sind hier ebenfalls nicht dargestellt. Sie müssen einschließlich der Signalleitungen 26 hinzugedacht werden.

**Fig. 2a** zeigt das Zusammenwirken einer Übertragungsvorrichtung 6 mit einem Greifer 22 mit einer Zuführeinrichtung 8, die derart ausgebildet ist, daß sie Magazine 16 zuführen kann, in welchen die Objektträger 2 gelagert sind. Dabei handelt es sich um eine Vielzahl von Objektträgern 2, die einschieb- und herausnehmbar in den Magazinen 16 liegen. Bei den Magazinen 16 kann es sich beispielsweise um solche handeln, in denen Objektträger 2 für eine gemeinsame Behandlung der Gewebeproben 1, beispielsweise in einem Färbebad, zusammengefaßt sind. Die Magazine 16 werden mittels eines Transportbandes 31 herangeführt und durch die Zuführeinrichtung 8 derart bereitgestellt, daß der Greifer 22 die Objektträger 2 ergreifen kann. Der Greifer 22 ist dabei nur symbolisch dargestellt, ein beispielsweise zangenartiger Greifmechanismus muß hinzugedacht werden. An-dem Greifer 22 befindet sich ein Lesegerät 4, welches auch als Schreibeinrichtung und zusätzlich als Detektor 24 ausgebildet sein kann.

Die Zuordnung der Objektträger 2 erfolgt mittels der Steuerung 5 und gegebenenfalls mittels des Zentralrechners 12, so wie dies zu Fig. 1 beschrieben wurde. Zusätzlich ist hier der Detektor 24 vorgesehen, der dazu dient, Objektträger 2, die unbrauchbar sind, oder Objektträger 2, die sich nicht einem Patienten zuordnen lassen, in ein Aussortierbehältnis 25 zu verbringen.

Ist ein Magazin 16 gelehrt, so wird es mittels einer Abführeinrichtung 17 wieder abtransportiert. Dabei zeigen die Pfeile 27 die Förderrichtung der Abführeinrichtung sowie des Transportbandes 31. Hat der Greifer 22 einen Objektträger 2 ergriffen und wurde er vom Lesegerät 4 gelesen und nicht aussortiert, so verbringt die Übertragungsvorrichtung 6 den Objektträger 2 zu einer Aufnahme 10 eines Präsentationsträgers 9. Zu diesem Zweck dient eine Führung 30, auf der die Übertragungsvorrichtung 6 verschiebbar gelagert ist, sowie die verschiedenen Stellbewegungen 19. Dabei handelt es sich um eine Stellbewegung 19', welche dazu dient, den Objektträger 2 aus dem Magazin 16 herauszuziehen. Danach tritt eine Stellbewegung 19" in Aktion und verbringt die Übertragungsvorrichtung 6 zu der Bereithaltungsvorrichtung 11 entlang der Führung 30. Die Bereithaltungsvorrichtung 11 ist hier nur symbolisch dargestellt. Diesen ganzen Stellbewegungen dienen Antriebe 7, die in dem Gehäuse der Übertragungsvorrichtung 6 untergebracht sein können.

Das Zusammenwirken der Übertragungsvorrichtung 6 mit der Bereithaltungsvorrichtung 11, um die Objektträger 2 dort einzuordnen, ist in der **Fig. 2b** dargestellt. Hier ist auch die Bereithaltungsvorrichtung 11 in Einzelheiten dargestellt. Sie verfügt ebenfalls über einen Antrieb 7, der Ebenen 23 in der Art eines Paternosters umlaufen lassen kann.

Zu Beginn werden mittels einer Zuführvorrichtung 28 Präsentationsträger 9 in Förderrichtung 27 der Bereithaltungsvorrichtung 1 zugeführt. Nach der Befüllung mit Objektträgern 2 sorgt dann eine Abführvorrichtung 29 dafür, daß die gefüllten Präsentationsträger 9 wieder abgeführt werden.

Die Präsentationsträger 9 sind mittels des hier nicht dargestellten Codes 13 entweder schon mit Patientenzuordnungen versehen, die durch eine Leseeinrichtung 14 erfaßt werden, damit die Zuordnung der Objektträger 2 zu entsprechenden Aufnahmen 10 der entsprechenden Präsentationsträger 9 mittels der Steuerung 5 und gegebenenfalls mittels des Zentralrechners 12 durchgeführt werden können. Alternativ kann bei der Zuführung der Objektträger 2 zu den Aufnahmen 10 der Präsentationsträger 9 auch eine Schreibeinrichtung 15 in Aktion treten, die dann diese Zuordnung entsprechend in den Code 13 der Präsentationsträger 9 eingibt. Leseeinrichtung 14 und Schreibeinrichtung 15 müssen hier genauso wie in Fig. 1 verschiebbar gelagert sein, um jeden Code 13 jedes Präsentationsträgers 9 erfassen zu können.

Nach Feststellung der Zuordnung fährt der Greifer 22 die entsprechende Ebene 23 an, auf der sich der Präsentationsträger 9 befindet, in dessen Aufnahmen 10 die Objektträger 2 eines bestimmten Patienten plaziert werden sollen. Mittels der Stellbewegung 19"' kann dieses Anfahren der entsprechenden Ebene 23 erfolgen oder es ist auch möglich, durch die paternosterartige Verstellung der Ebenen 23 diese Zuordnung herbeizuführen. Dann wird die Stellbewegung 19' in Aktion gesetzt, um mittels des Greifers 2 den Objektträger 2 in die entsprechende freie Aufnahme 10 des Präsentationsträgers 9 zu verbringen.

Ist dies ausgeführt, so wird die Übertragungsvorrichtung 6 mittels der Führung 30 und der Stellbewegung 19" wieder zu der Zuführvorrichtung 8 zurückgeführt, um dort den nächsten Objektträger 2 in Empfang zu nehmen.

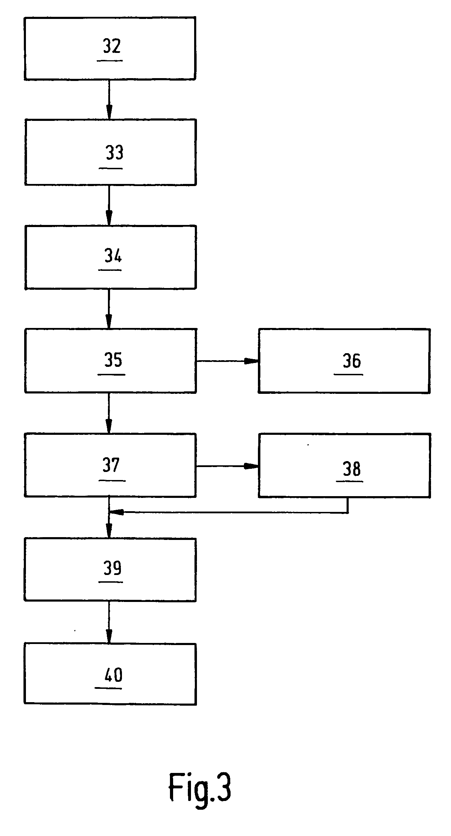

**Fig. 3** zeigt ein Diagramm möglicher Arbeitsschritte einer erfindungsgemäßen Vorrichtung. Dabei sind folgende Schritte angegeben:
- 32: Bereitstellung von Präsentationsträgern 9 in der Bereithaltungs- vorrichtung 11
- 33: Zuführung eines Objektträgers 2
- 34: Aufnahme des Objektträgers 2 durch die Übertragungsvorrichtung 6
- 35: Lesen und Detektieren des Objektträgers 2
- 36: Aussortieren unbrauchbarer und nicht zuordenbarer Objektträger 2 in das Aussortierbehältnis 25
- 37: Gekennzeichneter Präsentationsträger vorhanden?
- 38: Nein: Kennzeichnung eines Präsentationsträgers
- 39: Ja: Übertragung und Einsortierung an Aufnahme 10
- 40: Zurück, um den nächsten Objektträger einzusortieren

Die Ausführungsbeispiele zeigen auf, wie unterschiedlich die Vorrichtung ausgestaltet werden kann. Es ist möglich, sie lediglich mit einer Steuerung 5 auszustatten oder zusätzlich einen Zentralrechner 12 vorzusehen. Weiterhin kann die Zuführungsvorrichtung 8 in ihrer Ausgestaltung gem. Fig. 1 auch in der Ausführungsform der Fig. 2a und 2b vorgesehen sein sowie umgekehrt. Auch die Übertragungsvorrichtung 6 läßt sich von der Fig. 1 auf die Fig. 2a und 2b und umgekehrt übertragen. Es ist dann lediglich erforderlich, daß ein Schieber vorgesehen ist, der die Objektträger 2 aus dem Magazin 16 heraus auf die Rampe 18 fördert. Bei einem Zusammenwirken einer als Rampe 18 ausgebildeten Übertragungsvorrichtung 6 mit einer Bereitstellungsvorrichtung 11, wie sie in Fig. 2a und 2b dargestellt ist, müßte natürlich die Rampe 18 zwischen die Ebenen 23 einführbar sein. Bei Fig. 1 können natürlich auch als Übertragungsvorrichtung 6 ein Greifer 22 sowie eine Zuführvorrichtung 28 und eine Abführvorrichtung 29 für Präsentationsträger 9 vorgesehen sein.

Es ist also zu erkennen, wie eine ganze Reihe von Merkmalen gegenseitig austauschbar sind. Weiterhin sind natürlich auch ganz andere Lösungen möglich, beispielsweise eine Beförderung von Objektträgern 2 durch eine Rutsche, deren Ausgang dann der entsprechenden Aufnahme 10 eines Präsentationsträgers 9 zugeordnet wird. Weitere Möglichkeiten sind denkbar.

### Bezugszeichenliste

- 1: Gewebeproben
- 2: Objektträger
- 3: Code (Objektträger)
- 4: Lesegerät
- 5: Steuerung
- 6: Übertragungsvorrichtung
- 7: Antriebe
- 8: Zuführeinrichtung für Objektträger oder Magazine
- 9: Präsentationsträger
- 10: Aufnahmen für mehrere Objektträger
- 11: Bereithaltungsvorrichtung
- 12: Zentralrechner
- 13: Code (Präsentationsträger)
- 14: Leseeinrichtung
- 15: Schreibeinrichtung
- 16: Magazin
- 17: Abführeinrichtung für Magazine
- 18: Rampe
- 19: Stellbewegungen
- 19': Pfeil: Stellbewegung in x-Richtung
- 19": Pfeil: Stellbewegung in y-Richtung
- 19"': . Pfeil: Stellbewegung in z-Richtung (Höhe)
- 20: Rampenausgang
- 21: Verschiebevorrichtung
- 22: Greifer
- 23: Ebenen
- 24: Detektor
- 25: Aussortierbehältnis
- 26: Signalleitungen
- 27: Förderrichtung
- 28: Zuführvorrichtung für Präsentationsträger
- 29: Abführvorrichtung für Präsentationsträger
- 30: Führung der Übertragungsvorrichtung
- 31: Transportband

## Patentansprüche

1. Vorrichtung zur Handhabung mikrotomierter Gewebeproben (I), die auf einem Objektträger (2) angeordnet und mit einem maschinenlesbaren Code (3) versehen sind, wobei ein Lesegerät (4) der Erfassung der Informationen des Codes (3) und
eine Steuerung (5) einer Umsetzung der Informationen für die Handhabung dienen und wobei eine Übertragungsvorrichtung (6) und mindestens ein Antrieb (7) vorgesehen, sind, die derart ausgebildet sind, daß sie Objektträger (2) zu einer Bereithaltungsvorrichtung (11) mit mehreren Ebenen (23) verbringen können,
**dadurch gekennzeichnet,**
**daß** die Bereithaltungsvorrichtung (11) in den regalartig angeordneten Ebenen (23) jeweils in einer y-Richtung nebeneinander angeordnete Präsentationsträger (9) aufweist, wobei die Präsentationsträger (9) jeweils in einer rechtwinklig dazu verlaufenden x-Richtung mehrere Aufnahmen (10) für die Objektträger (2) aufweisen, daß die Übertragungsvorrichtung (6) zur Aufnahme der Objektträger (2) von einer Zuführeinrichtung (8) und zur Verbringung der Objektträger (2) an die Aufnahmen (10) ausgebildet ist, indem mit einer ersten Stellbewegung (19"') eine der Ebenen (23), mit einer zweiten Stellbewegung (19") der Präsentationsträger (9) und mit einer dritten Stellbewegung (19') die Aufnahme (10) angefahren wird,
und **daß** die Steuerung (5) derart ausgebildet ist, daß sie den mindestens einen Antrieb (7) aufgrund der Informationen des Codes (3) des Objektträgers (2) dahingehend steuert, daß durch die Übertragungsvorrichtung (6) Objektträger (2) mit Gewebeproben (1), die vom gleichen Patienten stammen, auf mindestens einen Präsentationsträger (9) in einer dem Patienten zugeordneten Reihenfolge verbringbar sind.

2. Vorrichtung nach Anspruch 1,
**dadurch gekennzeichnet,**
**daß** die Bereithaltungsvorrichtung (11) eine paternosterartige Anordnung von Ebenen (23) bereithält, um die Anzahl der Ebenen (23) zu vergrößern.

3. Vorrichtung nach Anspruch 1 oder 2,
**dadurch gekennzeichnet,**
**daß** die Übertragungsvorrichtung (6) einen Greifer (22) aufweist, der Objektträger (2) von der Zuführeinrichtung (8) oder aus einem auf dieser befindlichen Magazin (16) nimmt und mittels einer Stellbewegung (19, 19',19", 19"') zu einer freien Aufnahme (10) eines Präsentationsträgers (9) verbringt.

4. Vorrichtung nach Anspruch 3,
**dadurch gekennzeichnet,**
**daß** der Greifer (22) auch eine höhenmäßige Stellbewegung (19"') ausfiihrt, um mit der regalartigen Bereithaltungsvorrichtung (11) zusammenzuwirken.

5. Vorrichtung nach Anspruch 3 oder 4,
**dadurch gekennzeichnet,**
**daß** die Bereithaltungsvorrichtung (11) durch die paternosterartige Anordnung von Ebenen (23) selbst die höhenmäßige Stellbewegung (19"') ausführt.

6. Vorrichtung nach einem der Ansprüche 1 bis 5,
**dadurch gekennzeichnet,**
**daß** der Bereithaltungsvorrichtung (11) eine Zuführ- (28) und eine Abführvorrichtung (29) für Präsentationsträger (9) zugeordnet sind.

7. Vorrichtung nach einem der Ansprüche 1 bis 6,
**dadurch gekennzeichnet,**
**daß** das Lesegerät (4) an der Übertragungsvorrichtung (6) angeordnet ist.

8. Vorrichtung nach einem der Ansprüche 1 bis 7,
**dadurch gekennzeichnet,**
**daß** die Codes (3) die Patientenzuordnung unmittelbar enthalten.

9. Vorrichtung nach einem der Ansprüche 1 bis 8,
**dadurch gekennzeichnet,**
**daß** die Steuerung (5) die Zuordnung durch Verknüpfung des Codes (3) mit einer zentralen Datei in einem Zentralrechner (12) vornimmt.

10. Vorrichtung nach einem der Ansprüche 1 bis 9,
**dadurch gekennzeichnet,**
**daß** die Steuerung (5) die einem Patienten zugeordneten Objektträger (2) in einer fortlaufenden Reihe an den Präsentationsträger (9) gibt.

11. Vorrichtung nach einem der Ansprüche 1 bis 10,
**dadurch gekennzeichnet,**
**daß** die Steuerung (5) aufgrund vorgegebener Daten eine Reihenfolge der Objektträger (2) mit Geweben eines Patienten bildet.

12. Vorrichtung nach einem der Ansprüche 1 bis 11,
**dadurch gekennzeichnet,**
**daß** die Präsentationsträger (9) ebenfalls mindestens einen Code (13) aufweisen.

13. Vorrichtung nach Anspruch 12,
**dadurch gekennzeichnet,**
**daß** die Codes (13) bereits eine Kennzeichnung für eine mittelbare oder unmittelbare Patientenzuordnung enthalten.

14. Vorrichtung nach Anspruch 12 oder 13,
**dadurch gekennzeichnet,**
**daß** die Breithaltungsvorrichtung (11) eine Leseeinrichtung (14) für die Codes (13) der Präsentationsträger (9) aufweist.

15. Vorrichtung nach Anspruch 12, 13 oder 14,
**dadurch gekennzeichnet,**
**daß** die Bereithaltungsvorrichtung (11) eine Schreibeinrichtung (15) für die Informationseingabe an die Codes (13) aufweist.

16. Vorrichtung nach Anspruch 15,
**dadurch gekennzeichnet,**
**daß** die Steuerung (5) derart ausgebildet ist, daß sie mit der Verbringung eines Objektträgers (2) auf einen Präsentationsträger (9) dessen Code (13) mit der Patientenzuordnung beschriftet.

17. Vorrichtung nach Anspruch 1 bis 16,
**dadurch gekennzeichnet,**
**daß** auch eine Schreibeinrichtung für eine Informationseingabe an die Codes (3) der Objektträger (2) vorgesehen ist.

18. Vorrichtung nach Anspruch 1 bis 17,
**dadurch gekennzeichnet,**
**daß** die Steuerung (5) derart ausgebildet ist, daß sie alle Zuordnungen in einer zentralen Datei des Zentralrechners (12) ablegt.

19. Vorrichtung nach Anspruch 1 bis 18,
**dadurch gekennzeichnet,**
**daß** ein Display für eine Klarschriftinformation vorgesehen ist.

20. Vorrichtung nach einem der Ansprüche 1 bis 19,
**dadurch gekennzeichnet,**
**daß** die Zuführeinrichtung (8) für eine nacheinander erfolgende Zuführung einzelner Objektträger (2) zur Übertragungsvorrichtung (6) ausgebildet ist.

21. Vorrichtung nach einem der Ansprüche 1 bis 19,
**dadurch gekennzeichnet,**
**daß** die Zuführeinhchtung (8) für die Zuführung von Magazinen (16) mit Objektträgern (2) und die Übertragungsvorrichtung (6) für die Entnahme von Objektträgern (2) aus den Magazinen (16) eingerichtet sind.

22. Vorrichtung nach Anspruch 21,
**dadurch gekennzeichnet,**
**daß** eine Abführeinrichtung (17) für leere Magazine (16) vorgesehen ist.

23. Vorrichtung nach einem der Ansprüche 1 bis 22,
**dadurch gekennzeichnet,**
**daß** die Übertragungsvorrichtung (6) eine Rampe (18) ist, der die Zuführeinrichtung (8) die Objektträger (2) übergibt, daß eine Stellbewegung (19, 19', 19", 19"') den Rampenausgang (20) einer freien Aufnahme.(10) eines Präsentationsträgers (9) zuordnet und daß eine Verschiebevorrichtung (21) angeordnet ist, um die Objektträger (2) von der Rampe (18) zu schieben.

24. Vorrichtung nach einem der Ansprüche 1 bis 23,
**dadurch gekennzeichnet,**
**daß** an der Übertragungsvorrichtung (6) ein Detektor (24) angeordnet ist, um unbrauchbare Objektträger (2) zu identifizieren.

25. Vorrichtung nach einem der Ansprüche 1 bis 24,
**dadurch gekennzeichnet,**
**daß** die Steuerung (5) die Übertragungsvorrichtung (6) veranlaßt, unbrauchbare oder nicht zuordenbare Objektträger (2) an ein Aussortierbehältnis (25) zu übergeben.

## Claims

1. A device for handling microtomized tissue specimens (1) disposed on a microscope slide (2) and provided with a computer-readable code (3),
wherein a reader (4) serves to acquire the information in said code (3) and a control unit (5) serves to convert said information for handling purposes and
wherein a transfer device (6) and at least one drive (7) are provided, these being designed such that they can transport microscope slides (2) to a supply device (11) having a plurality of levels (23),
**characterized in that**
- said supply device (11) has, at each of its shelf-type levels (23), presentation carriers (9) juxtaposed in a Y direction, wherein said presentation carriers (9) each have a plurality of accommodating device (10) for said microscope slides (2) extending in an X direction at right angles to said Y direction,
- said transfer device (6) is adapted to receive said microscope slides (2) from a feeding device (8) and to convey said microscope slides (2) to said accommodating means (10) **in that** a first guided movement (19"') selects a level (23), a second guided movement (19") selects the presentation carrier (9), and a third guided movement (19') selects the accommodating device (10), and
- said control unit (5) is adapted to control said at least one drive (7) according to the information in said code (3) on said slide (2) such that said transfer device (6) is able to move said slides (2) holding said tissue specimens (1) derived from the same patient to at least one presentation carrier (9) in a sequence assigned to the patient.

2. The device as defined in claim 1,
**characterized in that**
said supply device (11) provides a paternoster-like system of levels (23), in order to increase the number of levels (23).

3. The device as defined in claim 1 or claim 2,
**characterized in that**
said transfer means (6) comprises a gripping device (22), which takes the slides (2) from said feeding device (8) or from a magazine (16) disposed thereon and moves it by a guided movement (19.19', 19", 19"') to a vacant accommodating device (10) in a presentation carrier (9)

4. The device as defined in claim 3,
**characterized in that**
said gripping device (22) also executes a vertically guided movement (19"') for cooperation with said shelf-type supply device (11).

5. The device as defined in claim 3 or claim 4,
**characterized in that**
said supply device (11) itself carries out said vertically guided movement (19"') by way of said paternoster-like system of levels (23).

6. The device as defined in any one of claims 1 to 5,
**characterized in that**
to said supply device (11) there are assigned a feeding device (28) and a removing device (29) for said presentation carriers (9).

7. The device as defined in any one of claims 1 to 6,
**characterized in that**
said reader (4) is disposed on said transfer device (6).

8. The device as defined in any one of claims 1 to 7,
**characterized in that**
said codes (3) contain direct allocation to the patient's file.

9. The device as defined in any one of claims 1 to 8,
**characterized in that**
said control unit (5) effects said allocation by linking said code (3) to a master file in a master computer (12).

10. The device as defined in any one of claims 1 to 9,
**characterized in that**
said control unit (5) passes said slides (2) allocated to a patient in a progressive sequence to said presentation carrier (9).

11. The device as defined in any one of claims 1 to 10,
**characterized in that**
said control unit (5) forms a sequence of said slides (2) holding tissues of a patient according to specific data.

12. The device as defined in any one of claims 1 to 11,
**characterized in that**
said presentation carriers (9) likewise have at least one code (13).

13. The device as defined in claim 12,
**characterized in that**
said codes (13) already contain information for indirect or direct allocation to the patient's file.

14. The device as defined in claim 12 or claim 13,
**characterized in that**
said supply device (11) comprises a reader (14) for said codes (13) on said presentation carrier (9).

15. The device as defined in claim 12, claim 13, or claim 14,
**characterized in that**
said supply device (11) has a writing device (15) for the entry of information to said codes (13).

16. The device as defined in claim 15,
**characterized in that**
said control unit (5) is formed such that when a slide (2) is conveyed to a presentation carrier (9), its code (13) comprising the allocation to the patient's file is written thereto by said writing device.

17. The device as defined in any one of claims 1 to 16,
**characterized in that**
a writing device for an entry of information to said codes (3) on said slides (2) is also provided.

18. The device as defined in any one of claims 1 to 17,
**characterized in that**
said control unit (5) is formed such that it saves all allocations to a master file in said master computer (12).

19. The device as defined in any one of claims 1 to 18,
**characterized in that**
a display for optical character information is provided.

20. The device as defined in any one of claims 1 to 19,
**characterized in that**
said feeding device (8) is adapted to successively feed individual slides (2) to said transfer device (6).

21. The device as defined in any one of claims 1 to 19,
**characterized in that**
said feeding unit (8) is adapted to feed magazines (16) containing slides (2) and said transfer device (6) is adapted to remove slides (2) from said magazines (16).

22. The device as defined in claim 21,
**characterized in that**
a take-away mechanism (17) for empty magazines (16) is provided.

23. The device as defined in any one of claims 1 to 22,
**characterized in that**
- said transfer device (6) consists of a ramp (18) that transfers said slides (2) to said feeding unit (8)
- a guided movement (19, 19', 19", 19"') assigns the ramp outlet (20) to a vacant accommodating device (10) in a presentation carrier (9), and
- a pushing mechanism (21) is provided for pushing said slides (2) away from said ramp (18).

24. A device as defined in any one of claims 1 to 23,
**characterized in that**
said transfer device (6) is provided with a detector (24) for identifying useless slides (2).

25. The device as defined in any one of claims 1 to 24,
**characterized in that**
said control unit (5) causes the transfer device (6) to transfer useless or unassignable slides (2) to a rejects receptacle (25).

## Revendications

1. Dispositif pour la manipulation d'échantillons de tissu microtomisés (1) qui sont disposés sur un support d'objets (2) et qui sont munis d'un code lisible mécaniquement (3), un appareil de lecture (4) servant à la saisie des informations du code (3) et une commande (5) à la conversion des informations pour la manipulation et un dispositif de transfert (6) et au moins un entraînement (7) étant prévus lesquels sont réalisés de sorte qu'ils peuvent déplacer des supports d'objets (2) à un dispositif de mise à disposition (11) avec plusieurs plans (23), **caractérisé en ce que** le dispositif de mise à disposition (11) présent des supports de présentation (9) disposés les uns à côté des autres respectivement dans une direction y dans des plans (23) disposés comme des rayonnages, les support de présentation (9) présentant respectivement dans une direction x s'étendant en angle droit plusieurs logements (10) pour les supports d'objets (2), **en ce que** le dispositif de transfert (6) est réalisé pour le logement des supports d'objets (2) depuis un dispositif d'amenée (9) et pour le transport des supports d'objets (2) aux logements (10), dans le fait qu'avec un premier déplacement de réglage (19'") l'un des plans (23) est abordé, avec un second mouvement de réglage (19") des support de présentation (9) et avec un troisième mouvement de réglage (19'), le logement (10) est abordé et **en ce que** la commande (5) (5) est réalisée de sorte qu'elle commande au moins un entraînement (7) sur la base des informations du code (3) du support d'objets (2) de sorte que par le dispositif de transfert (6), des supports d'objets (2) avec des échantillons tissulaires (1) qui proviennent du même patient peuvent être amenées au moins sur un support de présentation (9) dans une suite attribuée au patient.

2. Dispositif selon la revendication 1, **caractérisé en ce que** le dispositif de mise à disposition (11) met à disposition une disposition rotative de plans (23) selon le principe du paternoster pour augmenter le nombre des plans (23).

3. Dispositif selon la revendication 1 ou 2, **caractérisé en ce que** le dispositif de transfert (6) présente une pince (22) qui prend des support d'objets (2) depuis le dispositif d'amenée (8) ou depuis un magasin se trouvant sur celui-ci et l'amène au moyen d'un déplacement de réglage (19, 19', 19", 19''') à un logement libre (10) d'un support de présentation (9).

4. Dispositif selon la revendication 3, **caractérisé en ce que** la pince (22) effectue également un déplacement de réglage en hauteur (19"') pour coopérer avec le dispositif de mise à disposition en rayonnage (11).

5. Dispositif selon la revendication 3 ou 4, **caractérisé en ce que** le dispositif de mise à disposition (11) exécute lui-même le déplacement de réglage (19''') en hauteur par une disposition rotative de plans (23) selon le principe du paternoster.

6. Dispositif selon l'une des revendications 1 à 5, **caractérisé en ce que** le dispositif de mise à disposition (11) est associé à un dispositif d'amenée (28) et un dispositif d'évacuation (29) pour les supports de présentation (9).

7. Dispositif selon l'une des revendications 1 à 6, **caractérisé en ce que** l'appareil de lecture (4) est disposé sur le dispositif de transfert (6).

8. Dispositif selon l'une des revendications 1 à 7, **caractérisé en ce que** les codes (3) contiennent directement l'attribution du patient.

9. Dispositif selon l'une des revendications 1 à 8, **caractérisé en ce que** la commande (5) effectue l'attribution par liens du code (3) à un fichier central dans un ordinateur central (12).

10. Dispositif selon l'une des revendications 1 à 9, **caractérisé en ce que** la commande (5) délivre les supports d'objets (2) associés à un patient dans un ordre continu au support de présentation (9).

11. Dispositif selon l'une des revendications 1 à 10, **caractérisé en ce que** la commande (5) forme sur la base de données prescrites une suite de supports d'objets (2) avec des tissus d'un patient.

12. Dispositif selon l'une des revendications 1 à 11, **caractérisé en ce que** les supports d'objets (9) présentent également au moins un code (13).

13. Dispositif selon la revendication 12, **caractérisé en ce que** les codes (13) contiennent déjà une caractérisation pour une attribution de patient directe un indirecte.

14. Dispositif selon la revendication 12 ou 13, **caractérisé en ce que** le dispositif de mise à disposition (11) présente un dispositif de lecture (14) pour les codes (13) des supports de présentation (9).

15. Dispositif selon la revendication 12, 13, ou 14, **caractérisé en ce que** le dispositif de mise à disposition (11) présente un dispositif d'écriture (15) pour la saisie d'information aux codes (13).

16. Dispositif selon la revendication 15, **caractérisé en ce que** la commande (5) est réalisée de sorte qu'elle inscrit le code (13) avec le passage d'un support d'objets (2) sur un support de présentation (9).

17. Dispositif selon la revendication 1 à 16, **caractérisé en ce qu'**il est prévu également un dispositif coulissant pour une saisie d'information sur les codes (3) des supports d'objets (2).

18. Dispositif selon l'une des revendications 1 à 17, **caractérisé en ce que** la commande (5) est réalisée de sorte qu'elle dépose toutes les attributions dans un fichier central de l'ordinateur central (12).

19. Dispositif selon la revendication 1 à 18, **caractérisé en ce qu'**un écran est prévu pour une information en texte clair.

20. Dispositif selon l'une des revendications 1 à 19, **caractérisé en ce que** le dispositif d'amenée est réalisée pour une amenée successive de chacun des supports d'objets (2) pour le dispositif de transfert (6).

21. Dispositif selon l'une des revendications 1 à 19, **caractérisé en ce que** le dispositif d'amenée (8) est prévu pour l'amenée de magasins (16) avec des supports d'objets (2) et le dispositif de transfert pour le prélèvement de supports d'objets (2) hors des magasins (16).

22. Dispositif selon la revendication 21, **caractérisé en ce qu'**un dispositif d'évacuation (17) est prévu pour des magasins vides (16).

23. Dispositif selon l'une des revendications 1 à 22, **caractérisé en ce que** le dispositif de transfert (6) est une rampe (18) qui récupère les supports d'objets (2) du dispositif d'amenée (8), **en ce qu'**un déplacement de réglage (19, 19', 19", 19'''') associe la sortie de rampe (20) à un logement libre (10) d'un support de présentation (9) et **en ce qu'**un dispositif de coulissement est disposé pour pousser les supports d'objets (2) de la rampe (18).

24. Dispositif selon l'une des revendications 1 à 23, **caractérisé en ce qu'**un détecteur (24) pour identifier des supports d'objets inutilisables (2) est disposé sur le dispositif de transfert (6).

25. Dispositif selon l'une des revendications 1 à 24, **caractérisé en ce que** la commande (5) amène le dispositif de transfert (6) à remettre des supports d'objets (2) inutilisables ou non attribuables à un réservoir de triage (25).
